# EUROPEAN PATENT SPECIFICATION

(11) **EP 4 016 773 B1**
(45) Date of publication and mention of the grant of the patent: **03.12.2025**
(21) Application number: 21199365.4
(22) Date of filing: 28.09.2021
(51) Int. Cl.: H02G 3/08, F16B 2/24, F16B 5/12

(54) **EQUIPMENT CONNECTION DEVICE AND ELECTRICAL EQUIPMENT**
GERÄTEVERBINDUNGSVORRICHTUNG UND ELEKTRISCHES GERÄT
DISPOSITIF DE CONNEXION D'ÉQUIPEMENT ET ÉQUIPEMENT ÉLECTRIQUE

(30) Priority: 21.12.2020 CN 202011515984
(43) Date of publication of application: 22.06.2022
(73) Proprietor: Sungrow (Shanghai) Co., Ltd., Shanghai 201203 (CN)
(72) Inventor: YU, Haiyang, Pudong District, Shanghai, 201203 (CN); ZENG, Bing, Pudong District, Shanghai, 201203 (CN); WEI, Shiyuan, Pudong District, Shanghai, 201203 (CN)
(74) Representative: Biallo, Dario

(56) References cited:
- DE-A1- 102018 126 385
- DE-B- 1 120 908
- US-B1- 6 389 658

## Description

### FIELD

The present application relates to the technical field of intermediate connection structures, and in particular to an equipment connection device. The present application further relates to an electrical equipment which includes the above equipment connection device.

### BACKGROUND

When the product is mounted in an application scenario, in order to improve the stability of the product placement, an equipment connection device is generally required to fix the product in the corresponding scenario.

For example, for electrical equipment, during installation, depending on the installation environment, if fasteners are required for connection, a fastener mounting plate needs to be mounted on a corresponding external connector. Specifically, the external connector may be a bracket or a frame. While some installation environments adopt the buckle structure for installation, equipment connected with buckles needs to be installed. That is, according to different installation environments, different equipment connection devices need to be used, resulting in low versatility of the equipment connection devices.

Therefore, a technical problem urgently to be solved by those skilled in the art is how to improve the versatility of the equipment connection device.

US6,389,658B1 describes a clip for mounting an object such as an electrical box on a stud which comprises a fist side portion for engaging a first surface of the stud, a second side portion for engaging a second surface of the stud, the second side portion including at least one box clip arm for securing the electrical box to the clip, and at least one support member extending between the electrical box and the second surface of the stud for substantially preventing flexing of the clip and inward movement of the electrical box when a force is applied generally inwardly of the electrical box.

### SUMMARY

The object of the present application is to provide an electrical equipment including an equipment connection device which has improved versatility.

To achieve the above object, an equipment connection device is provided according to the present application, which includes:
a buckle capable of connecting with an external connector; and
a fastener mounting plate capable of connecting with the buckle, wherein the fastener mounting plate may be connected with the external connector, and the buckle is configured to connect with the equipment body.

Preferably, the buckle is detachably connected with the fastener mounting plate.

According to the invention, the buckle includes a connecting plate and a clamping plate connected to the connecting plate, the connecting plate is configured to connect with the equipment body, and a clamping groove for clamping the external connector is formed between the connecting plate and the clamping plate.

Preferably, when the fastener mounting plate is detachably connected with the buckle, the fastener mounting plate is inserted into the clamping groove and clamped by the buckle.

Preferably, the connecting plate and/or the clamping plate is provided with an anti-escaping barb which is configured to clamp the equipment body, a free end of the anti-escaping barb may extend into the clamping groove, a clamping hole is defined on the fastener mounting plate, and when the fastener mounting plate is detachably connected with the buckle, the anti-escaping barb is clamped in the clamping hole.

Preferably, the anti-escaping barb is arranged on the clamping plate.

Preferably, at least two clamping holes are provided, and one anti-escaping barb may be clamped in the clamping hole.

According to the invention, sliding rails are provided at two opposite sides of the connecting plate, and the sliding rails are provided with elastic limiting turnups capable of engaging with the equipment body.

Preferably, at least two buckles are provided, and all the buckles are detachably connected with the fastener mounting plate.

Preferably, a limiting protrusion that abuts against a side surface of the bottom ends of two adjacent buckles is provided at an end of the fastener mounting plate.

Preferably, the buckle is an integrally formed structure.

Preferably, the fastener mounting plate is provided with a fastener mounting slot hole, the fastener mounting slot hole includes an L-shaped hole the top of which extends to an end of the fastener mounting plate and a fastener mounting hole communicating with the L-shaped hole and used for limiting the fastener.

Preferably, the buckle is formed by metal stamping and bending.

According to the invention, an electrical equipment includes an equipment body and an equipment connection device mounted on the equipment body. The equipment connection device is the equipment connection device described above.

Preferably, the buckle is mounted on a side of the equipment body, and when projecting downward with the surface of the equipment body on which the buckle is mounted as the lower surface, the projection of the buckle is located within the projection range of the equipment body.

The equipment body is provided with a sliding groove adapted to the sliding rail, and a limiting groove for clamping the limiting turnup is defined in the middle of the sliding groove, and when the buckle is clamped with the equipment body, the elastic limiting turnup is clamped in the limiting groove.

Preferably, the equipment body is provided with a buckle mounting position for mounting the connecting plate, the buckle mounting position is an inward recessed groove body structure, and the groove bottom of the groove body is a buckle limiting platform. The buckle limiting platform abuts against a buckle limiting end face at the interconnection of the connecting plate and the clamping plate, and when the buckle abuts against the buckle limiting platform, the elastic limiting turnup is clamped in the limiting groove.

Preferably, the connecting plate and the sliding rail are in a plate structure which is integrally formed.

Preferably, the sliding rail protrudes outward from the edge of the clamping groove.

In the above technical solution, the equipment connection device provided by the present application includes a buckle capable of connecting with an external connector and a fastener mounting plate capable of connecting with the buckle, wherein the fastener mounting plate may be connected with the external connector, and the buckle is configured to connect with the equipment body. When equipment installation is needed, the buckle or the fastener mounting plate is mounted on the equipment body, and the buckle is assembled with the fastener mounting plate. In the specific installation environment, the buckle or the fastener mounting plate is selected according to needs to connect with the external connector to realize the installation of the equipment body.

As can be seen from the above description, in the equipment connection device provided in the present application, the equipment connection device is an assembly of the buckle and the fastener mounting plate. In specific use, the equipment may be mounted with the external environment through the buckle or the fastener mounting plate. Compared with the situation where it is necessary to replace the equipment connection device mounted with the equipment body, the versatility of the equipment connection device provided in the present application is improved.

### BRIEF DESCRIPTION OF THE DRAWINGS

For more clearly illustrating embodiments of the present application or technical solutions in the conventional technology, the drawing referred to for describing the embodiments or the conventional technology will be briefly described hereinafter. Apparently, the drawings in the following description are only some examples of the present application, and for those skilled in the art, other drawings may be obtained based on the provided drawings without any creative efforts.
FIG. 1 is a schematic structural view of an electrical equipment according to an embodiment of the present application;
FIG. 2 is a perspective view of the electrical equipment according to an embodiment of the present application;
FIG. 3 is a perspective view of the equipment body according to an embodiment of the present application;
FIG. 4 is a schematic structural view of the equipment body according to an embodiment of the present application;
FIG. 5 is a perspective view of a buckle according to an embodiment of the present application;
FIG. 6 is a schematic structural view of the buckle according to an embodiment of the present application;
FIG. 7 is a perspective view of a fastener mounting plate according to an embodiment of the present application;
FIG. 8 is a schematic structural view of mounting the buckle mounted on an equipment body according to an embodiment of the present application;
FIG. 9 is a schematic structural view of mounting the fastener mounting plate on the equipment body according to an embodiment of the present application;
FIG. 10 is a schematic structural view after the fastener mounting plate and the buckle have been mounted on the equipment body according to an embodiment of the present application;
FIG. 11 is a schematic view of mounting a frame to an electrical equipment according to an embodiment of the present application;
FIG. 12 is a schematic view of the electrical equipment after the frame has been mounted according to an embodiment of the present application;
FIG. 13 is a schematic view when the fastener mounting plate is pulled out after the frame has been mounted according to an embodiment of the present application;
FIG. 14 is a schematic view after the fastener mounting plate has been pulled out and the frame has been mounted according to an embodiment of the present application; and
FIG. 15 is a view of the mounting position of the electrical equipment according to an embodiment of the present application.

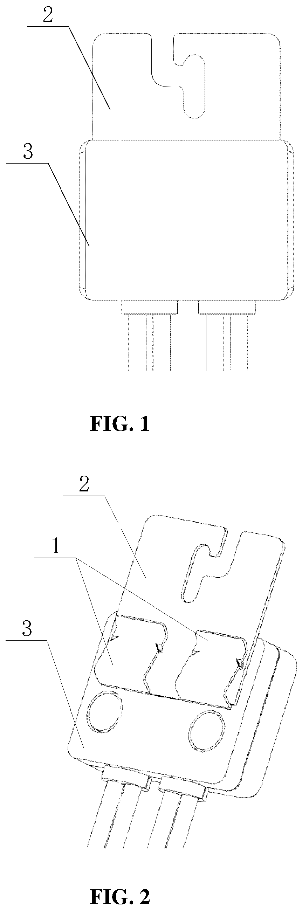

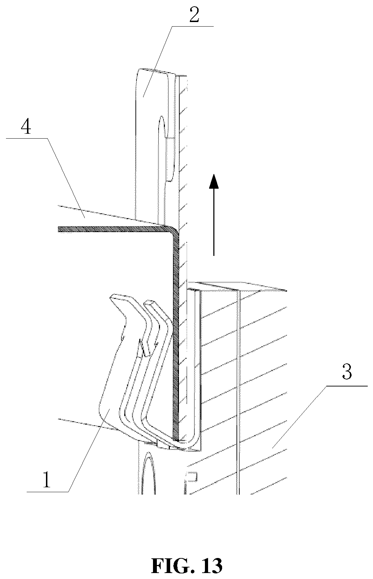

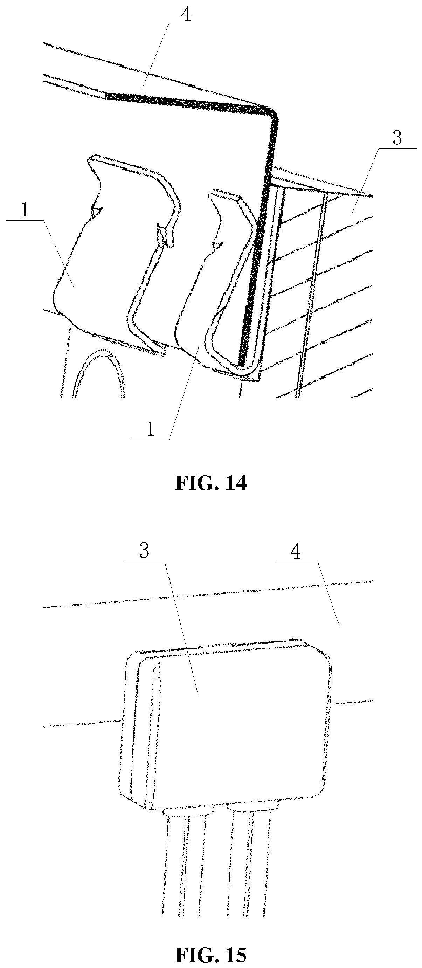

**Reference numerals in FIGS. 1 to 15:**

| | | | |
|---|---|---|---|
| 1 | buckle; | 1-1 | connecting plate; |
| 1-2 | clamping plate; | 1-3 | operating portion; |
| 1-4 | anti-escaping barb; | 1-5 | elastic limiting turnup; |
| 1-6 | sliding rail; | 1-7 | buckle limiting end face; |
| 2 | fastener mounting plate; | 2-1 | limiting protrusion; |
| 2-2 | clamping hole; | | |
| 3 | equipment body; | 3-1 | buckle mounting position; |
| 3-2 | limiting groove; | 3-3 | sliding groove; |
| 3-4 | buckle limiting platform; | | |
| 4 | frame. | | |

### DETAILED DESCRIPTION OF THE EMBODIMENTS

A core of the present application is to provide an electrical equipment including the above equipment connection device, which has improved versatility.

In order to enable those skilled in the art to better understand the technical solutions of the present application, the present application will be further described in detail below with reference to the accompanying drawings and embodiments.

Reference is made to FIGS. 1 to 15.

In a specific embodiment, the equipment connection device provided by the specific embodiment of the present application includes a buckle 1 and a fastener mounting plate 2 capable of detachably connecting with the buckle 1. The buckle 1 is configured to connect with an equipment body 3. Both the buckle 1 and the fastener mounting plate 2 can be installed with an external connector. Specifically, the external connector may be a bracket or a frame 4. Specifically, the buckle 1 and the fastener mounting plate 2 are fixedly connected, wherein the buckle 1 and the fastener mounting plate 2 may be connected by bonding, welding, or the like. In order to facilitate the disassembly and assembly of the equipment connection device, preferably, the buckle 1 and the fastener mounting plate 2 are detachably connected. Specifically, the buckle 1 and the fastener mounting plate 2 may be connected by a threaded fastener or the buckle 1.

Specifically, the buckle 1 and/or the fastener mounting plate 2 may be of plastic structure. In order to improve production efficiency, preferably, the buckle 1 and/or the fastener mounting plate 2 is an integrally formed structure. Specifically, the buckle 1 and/or the fastener mounting plate 2 may be of metal structure. The buckle 1 may be formed by metal stamping and bending. Specifically, the buckle 1 may have a sheet metal structure.

When equipment installation is needed, the buckle 1 is mounted on the equipment body 3, and the buckle 1 is assembled with the fastener mounting plate. In the specific installation environment, the buckle 1 or the fastener mounting plate 2 is selected according to needs to realize the installation of the equipment body 3.

As can be seen from the above description, in the equipment connection device provided by the specific embodiment of the present application, the equipment connection device is an assembly of the buckle 1 and the fastener mounting plate 2. In specific use, the equipment may be mounted with the external environment through the buckle 1 or the fastener mounting plate 2. There is no need to replace the equipment connection device mounted with the equipment body, and therefore, the versatility of the equipment connection device provided in the present application is improved.

Specifically, the buckle 1 may be detachably connected to the equipment body 3. Apparently, the fastener mounting plate 2 may also be detachably connected to the equipment body 3, wherein the fastener mounting plate 2 may also be connected to the equipment body 3 by threaded fasteners. During the packaging and transportation of the whole equipment, the buckle 1 and the fastener mounting plate 2 may be arranged separately from the equipment body 3, thus reducing the packaging volume required for packaging the equipment body 3.

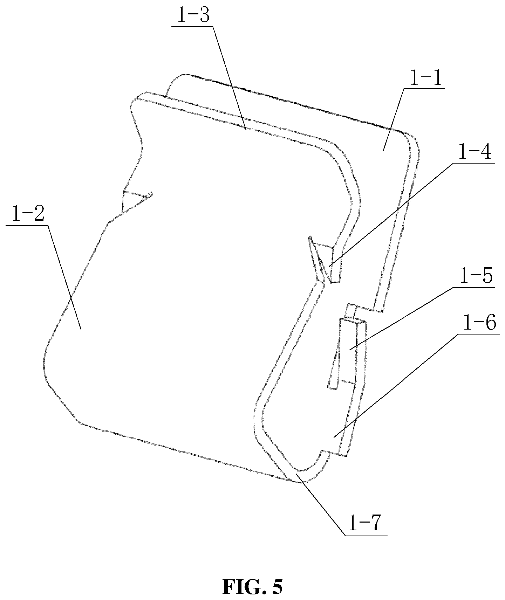

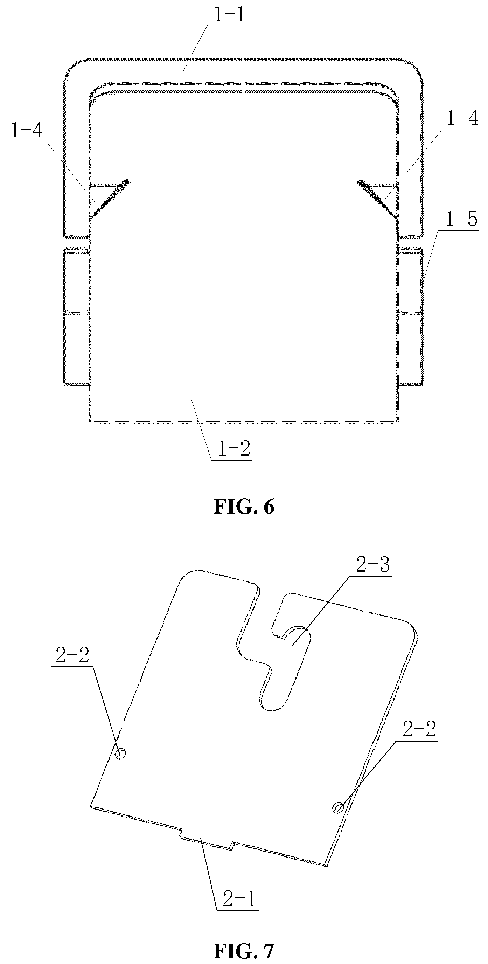

As shown in FIG. 5 and FIG. 6, the buckle 1 includes a connecting plate 1-1 and a clamping plate 1-2 connected to the connecting plate 1-1. The connecting plate 1-1 is configured to connect with the equipment body 3, and a clamping groove for clamping the external connector is formed between the connecting plate 1-1 and the clamping plate 1-2. Specifically, during assembly, a frame 4 is mounted in the clamping groove, so that the equipment body 3 mounted with the equipment connection device is mounted at a predetermined position. When the fastener mounting plate 2 is mounted on the buckle 1, the fastener mounting plate 2 is inserted into the clamping groove. That is, the clamping groove serves as a clamping position of the buckle 1, and when the fastener mounting plate 2 is mounted, the clamping groove may also serve as a fastener mounting position for mounting the fastener mounting plate 2.

Preferably, when the fastener mounting plate 2 is detachably connected to the buckle 1, the fastener mounting plate 2 is inserted into the clamping groove and is clamped with the buckle 1. Specifically, the buckle 1 and the fastener mounting plate 2 may be clamped with each other by a clamping structure.

Specifically, an operating portion 1-3 which is arranged on a side away from the connecting plate 1-1 is provided at a free end of the buckle 1. Specifically, the operating portion 1-3 has an arc-shaped outward flanging structure.

Specifically, the fastener mounting plate 2 is detachably connected with the clamping plate 1-2, or the fastener mounting plate 2 is detachably connected with the connecting plate 1-1. Specifically, the clamping plate 1-2 or the connecting plate 1-1 may be connected with the fastener mounting plate 2 by threaded fasteners.

As shown in FIG. 5 and FIG. 7, in order to facilitate the disassembly and assembly of the fastener mounting plate 2, preferably, the connecting plate 1-1 and/or the clamping plate 1-2 is provided with anti-escaping barbs 1-4 which are configured to clamp the equipment body 3. A free end of the anti-escaping barb 1-4 may extend into the clamping groove. Clamping holes 2-2 are provided on the fastener mounting plate 2. When the fastener mounting plate 2 is detachably connected to the buckle 1, the anti-escaping barbs 1-4 are clamped in the clamping holes 2-2.

It is possible that only one anti-escaping barb 1-4 is provided, and only one clamping hole 2-2 is provided. The clamping hole 2-2 may be a circular hole or a square hole. In order to avoid stress concentration, preferably, the clamping hole 2-2 is a circular hole. The fastener mounting plate 2 may be disassembled without tools, which improves the practicality and convenience of the equipment connection device. When the buckle 1 realizes the mounting of the equipment body 3 with the outside, the anti-escaping barb 1-4 may abut against and engage with the external equipment extending into the clamping groove.

Specifically, the anti-escaping barb 1-4 is arranged on the clamping plate 1-2, and each clamping plate 1-2 is provided with at least one anti-escaping barb 1-4.

In order to improve the installation stability of the fastener mounting plate 2, preferably, at least two clamping holes 2-2 are provided, and each clamping hole 2-2 can engage with one anti-escaping barb 1-4. Specifically, the clamping holes 2-2 may be located at the same height.

Furthermore, at least two buckles 1 are provided, and all the buckles 1 are detachably connected to the fastener mounting plate 2. Specifically, preferably, at least one anti-escaping barb 1-4 on each buckle 1 is detachably connected to the fastener mounting plate 2. Each buckle 1 may be provided with multiple anti-escaping barbs 1-4. Specifically, each buckle 1 may be provided with two anti-escaping barbs 1-4, and the two anti-escaping barbs 1-4 are symmetrically distributed on opposite sides of the clamping plate 1-2.

As shown in FIG. 7, furthermore, a limiting protrusion 2-1 that abuts against a side surface of the bottom ends of two adjacent buckles 1 is provided at an end of the fastener mounting plate 2. When the fastener mounting plate 2 is locked with the buckle 1, the position guide of the anti-escaping barb 1-4 and the clamping hole 2-2 is realized through the limiting protrusion 2-1, so that the fastener mounting plate 2 is smoothly clamped with the buckle 1.

Specifically, the connecting plate 1-1 is detachably connected to the equipment body 3. Specifically, one of the connecting plate 1-1 and the equipment body 3 is provided with the limiting protrusion, and the other is provided with a limiting hole for clamping the limiting protrusion.

According to the invention, sliding rails 1-6 are provided at two opposite sides of the connecting plate 1-1, and the sliding rails 1-6 may specifically have a flat plate structure. Each of the sliding rails 1-6 is provided with an elastic limiting turnup 1-5 capable of engaging with the equipment body 3. At least one elastic limiting turnup1-5 is provided on each sliding rail 1-6. A free end of the elastic limiting turnup 1-5 is close to the clamping plate 1-2. Preferably, the sliding rail 1-6 and the connecting plate 1-1 are integrally formed.

On the basis of the above solutions, preferably, the fastener mounting plate 2 is provided with a fastener mounting slot hole, the fastener mounting slot hole includes an L-shaped hole the top of which extends to an end of the fastener mounting plate 2 and a fastener mounting hole communicating with the L-shaped hole and used for limiting the fastener. Specifically, the fastener mounting plate 2 may be a threaded fastener mounting plate. Specifically, the fastener mounting hole is used for mounting the fastener mounting plate 2 on screws or bolts. When the fastener mounting plate 2 mounted on the threaded fastener is removed, the threaded fastener enters and exits the fastener mounting hole through the L-shaped hole by moving the fastener mounting plate 2.

An electrical equipment provided by the present application includes an equipment body 3 and an equipment connection device mounted on the equipment body 3, wherein the equipment connection device is any one of the above equipment connection devices. The specific structure of the equipment connection device has been described above. Since the electrical equipment includes the above-mentioned equipment connection device, the electrical equipment also has the above technical effects.

As shown in FIG. 2, in order to reduce the overall surface area occupied by the electrical equipment, preferably, the buckle 1 is mounted on a side of the equipment body 3. Specifically, the buckle 1 may be mounted on the back surface, the front surface or the side surface connecting the back surface and the front surface of the equipment body 3. Specifically, when projecting downward with the surface of the equipment body 3 on which the buckle 1 is mounted as the lower surface, the projection of the buckle 1 is located within the projection range of the equipment body 3. That is, the edge of the buckle 1 does not protrude from the edge of the equipment body 3. Besides, during the packaging and transportation of the whole equipment, the buckle 1 and the equipment body 3 may be arranged separately, and the fastener mounting plate 2 and the buckle 1 may be arranged separately, further reducing the packaging volume required for packaging the equipment body 3.

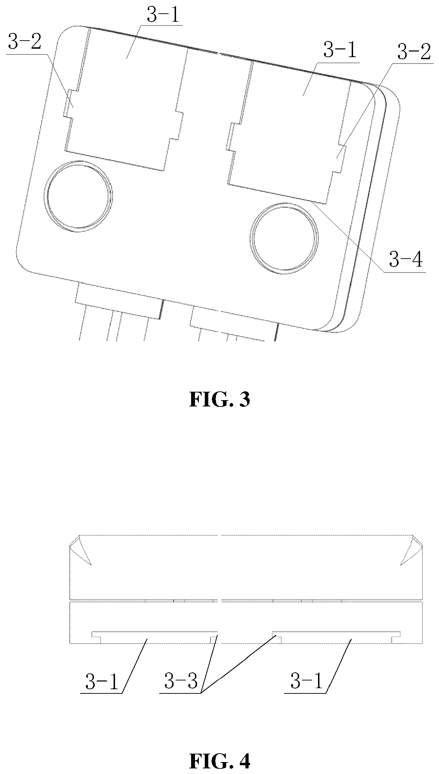

An electrical equipment provided by the present application includes an equipment body 3 and an equipment connection device mounted on the equipment body 3, wherein the equipment connection device is any one of the above equipment connection devices. As shown in FIG. 3 and FIG. 4, the buckle 1 is configured to connect with the equipment body 3. The equipment body 3 is provided with sliding grooves 3-3 that are adapted to the sliding rails 1-6. Limiting grooves 3-2 for clamping limiting turnups are provided in the middle of the sliding grooves 3-3. When the buckle 1 is clamped with the equipment body 3, the elastic limiting turnups 1-5 are clamped in the limiting grooves 3-2.

Specifically, the equipment body 3 is provided with a buckle mounting position 3-1 for mounting the connecting plate 1-1. The buckle mounting position 3-1 is an inward recessed groove body structure, and the groove bottom of the groove body is a buckle limiting platform 3-4. The buckle limiting platform 3-4 abuts against a buckle limiting end face 1-7 at the interconnection of the connecting plate 1-1 and the clamping plate 1-2 on the buckle 1, and when the buckle 1 abuts against the buckle limiting platform 3-4, the elastic limiting turnup 1-5 is clamped in the limiting groove 3-2.

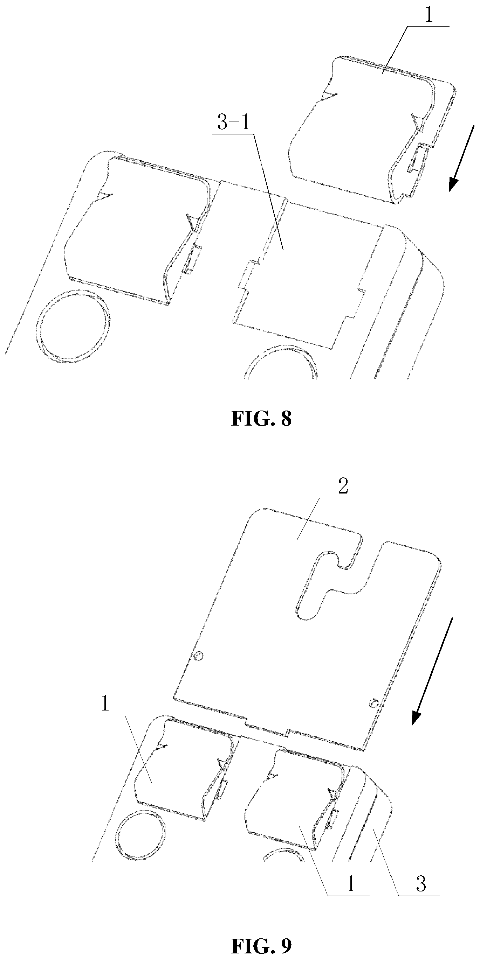

When mounting the equipment connection device, as shown in FIG. 8, the buckle 1 is mounted along the sliding rail 1-6, and the elastic limiting turnup 1-5 is deformed during the mounting process. The elastic limiting turnup 1-5 pops up when it reaches the limiting groove 3-2, forming a reverse limit, and at this time, the buckle limiting platform 3-4 abuts against and limit the buckle limiting end face 1-7, as shown in FIG. 9. Hereto, the mounting of the buckle 1 is finished.

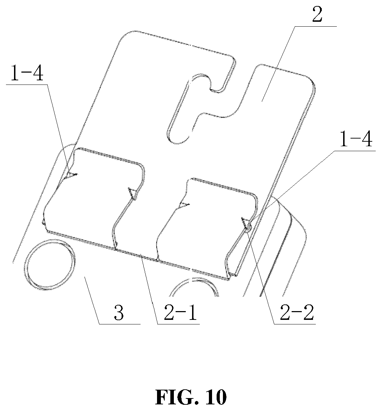

As shown in FIG. 9, the fastener mounting plate 2 is mounted in the direction of the arrow. After the fastener mounting plate 2 is mounted in place, the anti-escaping barbs 1-4 are inserted into the clamping holes 2-2. As shown in FIG. 10, the limiting protrusion 2-1 forms a limiting relationship with the side surface of the buckle 1 to keep the position of the fastener mounting plate 2 stable.

As shown in FIG. 5 and FIG. 6, in order to facilitate the disassembly of the fastener mounting plate 2, preferably, the sliding rails 1-6 protrude outside the edge of the clamping groove.

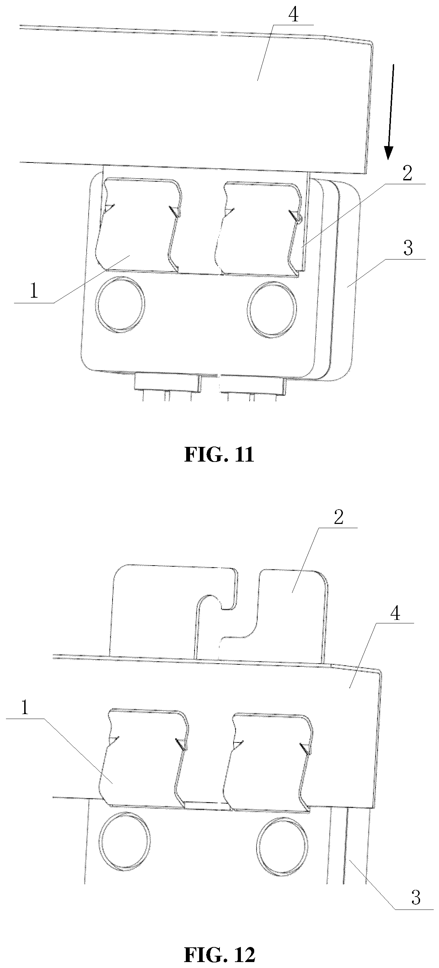

If fasteners are not required for on-site mounting, i.e., the buckle 1 is required for mounting, as shown in FIG. 11, on the basis of the above mounting state, the frame 4 to be mounted is directly inserted in the clamping groove, and then the fastener mounting plate 2 is pulled out by hand. In this case, the anti-escaping barbs 1-4 may form a limit with the frame 4. The fastener mounting plate 2 is in surface contact with the frame 4 and the equipment body 3, and the friction force is small, so the fastener mounting plate 2 can be directly pulled out in the arrow direction.

For the electrical equipment provided in this application, since the buckle 1 may not protrude from the outer contour of the equipment body 3, the shape parameters are small, which improves the comparison competitiveness of the product parameters.

On the other hand, since the buckle 1 and the fastener mounting plate 2 are detachably connected, the electrical equipment has a small size and a small packaging size, which saves packaging costs and is convenient for widespread use.

In the present specification, the embodiments are described in a progressive manner. Each embodiment mainly focuses on an aspect different from other embodiments, and reference can be made to these similar parts among the embodiments.

According to the above description of the disclosed embodiments, those skilled in the art can implement or practice the present application. Hence, the present application is not limited to the embodiments disclosed herein, but is to conform to the widest scope in accordance with the wording of the appended claims.

## Claims

1. An electrical equipment, comprising an equipment body (3) and an equipment connection device mounted on the equipment body (3),
wherein the equipment connection device comprises:
a buckle capable (1) of connecting with an external connector; and
a fastener mounting plate (2) capable of connecting with the buckle (1),
wherein the fastener mounting plate (2) is capable of connecting with the external connector, and the buckle (1) is configured to connect with the equipment body (3),
wherein the buckle (1) comprises a connecting plate (1-1) and a clamping plate (1-2) connected to the connecting plate (1-1), the connecting plate (1-1) is configured to connect with the equipment body (3), and a clamping groove for clamping the external connector is formed between the connecting plate (1-1) and the clamping plate (1-2),
wherein a sliding rail (1-6) is provided at two opposite sides of the connecting plate (1-1), and the sliding rail (1-6) is provided with an elastic limiting turnup (1-5) capable of engaging with the equipment body (3)
wherein, the equipment body (3) is provided with a sliding groove (3-3) that is adapted to the sliding rail (1-6), a limiting groove (3-2) for clamping the limiting turnup is provided in the middle of the sliding groove (3-3), and when the buckle (1) is clamped with the equipment body (3), the elastic limiting turnup (1-5) is clamped in the limiting groove (3-2).

2. The electrical equipment according to claim 1, wherein the equipment body (3) is provided with a buckle mounting position (3-1) for mounting the connecting plate (1-1), the buckle mounting position (3-1) is an inward recessed groove body structure, and the groove bottom of the groove body is a buckle limiting platform (3-4); the buckle limiting platform (3-4) abuts against a buckle limiting end face (1-7) at the interconnection of the connecting plate (1-1) and the clamping plate (1-2), and when the buckle (1) abuts against the buckle limiting platform (3-4), the elastic limiting turnup (1-5) is clamped in the limiting groove (3-2).

3. The electrical equipment according to claim 1, wherein the buckle (1) is detachably connected with the fastener mounting plate (2).

4. The electrical equipment according to claim 1, wherein when the fastener mounting plate (2) is detachably connected with the buckle (1), and the fastener mounting plate (2) is inserted into the clamping groove and clamped by the buckle (1).

5. The electrical equipment according to claim 4, wherein the connecting plate (1-1) and/or the clamping plate (1-2) is provided with an anti-escaping barb (1-4) which is configured to clamp the fastener mounting plate (2) or the external connector, a free end of the anti-escaping barb (1-4) is configured to extend into the clamping groove, a clamping hole (2-2) is defined on the fastener mounting plate (2), and when the fastener mounting plate (2) is detachably connected with the buckle (1), the anti-escaping barb (1-4) is clamped in the clamping hole (2-2).

6. The electrical equipment according to claim 5, wherein the anti-escaping barb (1-4) is arranged on the clamping plate (1-2), and the clamping plate (1-2) is provided with at least one anti-escaping barb (1-4).

7. The electrical equipment according to claim 1, wherein at least two buckles (1) are provided, and all the buckles (1) are detachably connected with the fastener mounting plate (2).

8. The electrical equipment according to claim 7, wherein a limiting protrusion (2-1) that abuts against a side surface of the bottom ends of two adjacent buckles (1) is provided at an end of the fastener mounting plate (2).

9. The electrical equipment according to claim 1, wherein the buckle (1) has an integrally formed structure.

10. The electrical equipment according to claim 1, wherein the fastener mounting plate (2) is provided with a fastener mounting slot hole, the fastener mounting slot hole comprises an L-shaped hole the top of which extends to an end of the fastener mounting plate (2) and a fastener mounting hole communicating with the L-shaped hole and used for limiting a fastener.

11. The electrical equipment according to claim 1, wherein the buckle (1) is mounted on a side of the equipment body (3), and when projecting downward with a surface of the equipment body (3) on which the buckle (1) is mounted as a lower surface, a projection of the buckle (1) is located within a projection range of the equipment body (3).

## Patentansprüche

1. Elektrische Ausrüstung, die einen Ausrüstungskörper (3) und eine am Ausrüstungskörper (3) angebrachte Ausrüstungsanschlussvorrichtung umfasst, wobei die Ausrüstungsanschlussvorrichtung umfasst:
eine Schnalle (1), die mit einem externen Verbinder verbunden werden kann; und
eine Befestigungsplatte (2) für den Verschluss, die mit der Schnalle (1) verbunden werden kann,
wobei die Befestigungsplatte (2) in der Lage ist, mit dem externen Verbinder verbunden zu werden, und die Schnalle (1) so konfiguriert ist, dass sie mit dem Ausrüstungskörper (3) verbunden werden kann,
wobei die Schnalle (1) eine Verbindungsplatte (1-1) und eine Klemmplatte (1-2), die mit der Verbindungsplatte (1-1) verbunden ist, umfasst, die Verbindungsplatte (1-1) so konfiguriert ist, dass sie mit dem Ausrüstungskörper (3) verbunden ist, und eine Klemmnut zum Klemmen des externen Verbinders zwischen der Verbindungsplatte (1-1) und der Klemmplatte (1-2) ausgebildet ist,
wobei eine Gleitschiene (1-6) an zwei gegenüberliegenden Seiten der Verbindungsplatte (1-1) vorgesehen ist, und die Gleitschiene (1-6) mit einem elastischen Begrenzungsaufschlag (1-5) versehen ist, der mit dem Ausrüstungskörper (3) in Eingriff kommen kann
wobei
der Ausrüstungskörper (3) mit einer Gleitnut (3-3) versehen ist, die an die Gleitschiene (1-6) angepasst ist, eine Begrenzungsnut (3-2) zum Einklemmen des Begrenzungsaufschlags in der Mitte der Gleitnut (3-3) vorgesehen ist, und wenn die Schnalle (1) mit dem Ausrüstungskörper (3) geklemmt wird, der elastische Begrenzungsaufschlag (1-5) in der Begrenzungsnut (3-2) eingeklemmt wird.

2. Elektrische Ausrüstung nach Anspruch 1, wobei der Ausrüstungskörper (3) mit einer Schnallenbefestigungsposition (3-1) zur Befestigung der Verbindungsplatte (1-1) versehen ist, die Schnallenbefestigungsposition (3-1) eine nach innen vertiefte Nutkörperstruktur ist und der Nutboden des Nutkörpers eine Schnallenbegrenzungsplattform (3-4) ist; die Schnallenbegrenzungsplattform (3-4) an einer Schnallenbegrenzungsendfläche (1-7) an der Verbindung der Verbindungsplatte (1-1) und der Klemmplatte (1-2) anliegt, und wenn die Schnalle (1) an der Schnallenbegrenzungsplattform (3-4) anliegt, wird die elastische Begrenzungsumdrehung (1-5) in der Begrenzungsnut (3-2) festgeklemmt.

3. Elektrische Ausrüstung nach Anspruch 1, wobei die Schnalle (1) lösbar mit der Befestigungsplatte (2) verbunden ist.

4. Elektrische Ausrüstung nach Anspruch 1, wobei die Befestigungsplatte (2) lösbar mit der Schnalle (1) verbunden ist und die Befestigungsplatte (2) in die Klemmrille eingeführt und von der Schnalle (1) geklemmt wird.

5. Elektrische Ausrüstung nach Anspruch 4, wobei die Verbindungsplatte (1-1) und/oder die Klemmplatte (1-2) mit einem Abhebesicherungswiderhaken (1-4) versehen ist, der so konfiguriert ist, dass er die Befestigungsmontageplatte (2) oder den externen Verbinder festklemmt, ein freies Ende des Anti-Abschneide-Widerhakens (1-4) so konfiguriert ist, dass es sich in die Klemmrille erstreckt, ein Klemmloch (2-2) auf der Befestigungsplatte (2) des Verschlusses definiert ist und, wenn die Befestigungsplatte (2) des Verschlusses lösbar mit der Schnalle (1) verbunden ist, der Anti-Abschneide-Widerhaken (1-4) in dem Klemmloch (2-2) festgeklemmt ist.

6. Elektrische Ausrüstung nach Anspruch 5, wobei der Abhebesicherungswiderhaken (1-4) an der Klemmplatte (1-2) angeordnet ist und die Klemmplatte (1-2) mit mindestens einem Abhebesicherungswiderhaken (1-4) versehen ist.

7. Elektrische Ausrüstung nach Anspruch 1, wobei mindestens zwei Schnallen (1) vorgesehen sind und alle Schnallen (1) lösbar mit der Befestigungsplatte (2) verbunden sind.

8. Elektrische Ausrüstung nach Anspruch 7, wobei an einem Ende der Befestigungsplatte (2) ein Begrenzungsvorsprung (2-1) vorgesehen ist, der an einer Seitenfläche der unteren Enden von zwei benachbarten Schnallen (1) anliegt.

9. Elektrische Ausrüstung nach Anspruch 1, wobei die Schnalle (1) eine einstückige Struktur aufweist.

10. Elektrische Ausrüstung nach Anspruch 1, wobei die Befestigungsplatte (2) mit einem Schlitzloch für die Befestigung versehen ist, wobei das Schlitzloch für die Befestigung ein L-förmiges Loch, dessen Oberseite sich bis zu einem Ende der Befestigungsplatte (2) erstreckt, und ein Loch für die Befestigung umfasst, das mit dem L-förmigen Loch in Verbindung steht und zur Begrenzung eines Befestigungsmittels verwendet wird.

11. Elektrische Ausrüstung nach Anspruch 1, wobei die Schnalle (1) an einer Seite des Ausrüstungskörpers (3) angebracht ist und ein Vorsprung der Schnalle (1) innerhalb eines Vorsprungsbereichs des Ausrüstungskörpers (3) liegt, wenn sie mit einer Oberfläche des Ausrüstungskörpers (3), an der die Schnalle (1) als untere Oberfläche angebracht ist, nach unten ragt.

## Revendications

1. Équipement électrique, comprenant un corps d'équipement (3) et un dispositif de connexion d'équipement monté sur le corps d'équipement (3),
dans lequel le dispositif de connexion de l'équipement comprend:
une boucle capable (1) de se connecter à un connecteur externe; et
une plaque de montage de l'attache (2) capable de se connecter à la boucle (1),
la plaque de montage de l'attache (2) peut se connecter au connecteur externe, et la boucle (1) est configurée pour se connecter au corps de l'équipement (3),
la boucle (1) comprend une plaque de connexion (1-1) et une plaque de serrage (1-2) reliée à la plaque de connexion (1-1), la plaque de connexion (1-1) est configurée pour se connecter au corps de l'équipement (3), et une rainure de serrage pour serrer le connecteur externe est formée entre la plaque de connexion (1-1) et la plaque de serrage (1-2),
dans lequel un rail de glissement (1-6) est prévu sur deux côtés opposés de la plaque de connexion (1-1), et le rail de glissement (1-6) est pourvu d'une butée de limitation élastique (1-5) capable de s'engager dans le corps de l'équipement (3)
dans lequel
le corps de l'équipement (3) est pourvu d'une rainure de glissement (3-3) adaptée au rail de glissement (1-6), une rainure de limitation (3-2) pour le serrage du retournement de limitation est prévue au milieu de la rainure de glissement (3-3), et lorsque la boucle (1) est serrée avec le corps de l'équipement (3), le retournement de limitation élastique (1-5) est serré dans la rainure de limitation (3-2).

2. Équipement électrique selon la revendication 1, dans lequel le corps de l'équipement (3) est pourvu d'une position de montage de boucle (3-1) pour le montage de la plaque de connexion (1-1), la position de montage de boucle (3-1) est une structure de corps de rainure en retrait vers l'intérieur, et le fond de la rainure du corps de rainure est une plate-forme de limitation de boucle (3-4); la plate-forme de limitation de la boucle (3-4) vient en butée contre une face terminale de limitation de la boucle (1-7) à l'interconnexion de la plaque de connexion (1-1) et de la plaque de serrage (1-2), et lorsque la boucle (1) vient en butée contre la plate-forme de limitation de la boucle (3-4), le retournement élastique de limitation (1-5) est serré dans la rainure de limitation (3-2).

3. Équipement électrique selon la revendication 1, dans lequel la boucle (1) est reliée de manière amovible à la plaque de montage de l'attache (2).

4. Équipement électrique selon la revendication 1, dans lequel lorsque la plaque de montage de l'attache (2) est connectée de manière amovible à la boucle (1), et que la plaque de montage de l'attache (2) est insérée dans la rainure de serrage et serrée par la boucle (1).

5. Équipement électrique selon la revendication 4, dans lequel la plaque de connexion (1-1) et/ou la plaque de serrage (1-2) est pourvue d'un ardillon anti-escalade (1-4) qui est configuré pour serrer la plaque de montage de l'attache (2) ou le connecteur externe, une extrémité libre de l'ardillon anti-escalade (1-4) est configurée pour s'étendre dans la rainure de serrage, un trou de serrage (2-2) est défini sur la plaque de montage de l'attache (2), et lorsque la plaque de montage de l'attache (2) est connectée de manière amovible à la boucle (1), l'ardillon anti-escalade (1-4) est serré dans le trou de serrage (2-2).

6. Équipement électrique selon la revendication 5, dans lequel la barrette anti-escamotage (1-4) est disposée sur la plaque de serrage (1-2), et la plaque de serrage (1-2) est pourvue d'au moins une barrette anti-escamotage (1-4).

7. Équipement électrique selon la revendication 1, dans lequel au moins deux boucles (1) sont fournies, et toutes les boucles (1) sont reliées de manière amovible à la plaque de montage de l'attache (2).

8. Équipement électrique selon la revendication 7, dans lequel une saillie de limitation (2-1) qui vient en butée contre une surface latérale des extrémités inférieures de deux boucles adjacentes (1) est prévue à une extrémité de la plaque de montage de l'attache (2).

9. Équipement électrique selon la revendication 1, dans lequel la boucle (1) a une structure formée d'un seul tenant.

10. Équipement électrique selon la revendication 1, dans lequel la plaque de montage de fixation (2) est pourvue d'un trou de fente de montage de fixation, le trou de fente de montage de fixation comprend un trou en forme de L dont le haut s'étend jusqu'à une extrémité de la plaque de montage de fixation (2) et un trou de montage de fixation communiquant avec le trou en forme de L et utilisé pour limiter un élément de fixation.

11. Équipement électrique selon la revendication 1, dans lequel la boucle (1) est montée sur un côté du corps de l'équipement (3), et lors de la projection vers le bas avec une surface du corps de l'équipement (3) sur laquelle la boucle (1) est montée comme surface inférieure, une projection de la boucle (1) est située dans une plage de projection du corps de l'équipement (3).
